# EUROPÄISCHE PATENTSCHRIFT

(11) **EP 0 876 647 B1**
(45) Veröffentlichungstag und Bekanntmachung des Hinweises auf die Patenterteilung: **31.10.2001**
(21) Anmeldenummer: 97900998.2
(22) Anmeldetag: 10.01.1997
(51) Int. Cl.: G06F 9/44

(54) **GRAPHISCHE BEDIENOBERFLÄCHE ZUR PROGRAMMIERUNG VON SPEICHERPROGRAMMIERBAREN STEUERUNGEN**
GRAPHIC OPERATING SURFACE FOR PROGRAMMING PROGRAMMABLE CONTROLLERS
INTERFACE GRAPHIQUE D'EXPLOITATION POUR LA PROGRAMMATION DE COMMANDES PROGRAMMABLES

(30) Priorität: 25.01.1996 EP 96101067
(43) Veröffentlichungstag der Anmeldung: 11.11.1998
(73) Patentinhaber: SIEMENS AKTIENGESELLSCHAFT, 80333 München (DE)
(72) Erfinder: SALOMON, Oliver, D-91207 Lauf (DE); WITTE, Manfred, D-91056 Erlangen (DE); ELSTERER, Stefan, D-90451 Nürnberg (DE)
(86) Internationale Anmeldenummer: EP9700100
(87) Internationale Veröffentlichungsnummer: WO9727540

(56) Entgegenhaltungen:
- EP-A- 0 549 510
- US-A- 4 914 568
- PROCEEDINGS OF THE 10TH IEEE/AIAA DIGITAL AVIONICS SYSTEMS CONFERENCE, 14. - 17.Oktober 1991, LOS ANGELES, USA, Seiten 299-304, XP000309258 CHESTER DELLEN & GREG LIEBNER: "Automated Code Generation from Graphical Reusable Templates"
- INDUSTRIE ELEKTRIK + ELEKTRONIK, Vol.33, No.1, 1988, Seiten 16 - 18, M. HOLDER: "SPS-Esperanto"

## Beschreibung

Graphische Bedienoberfläche zur Programmierung von speicherprogrammierbaren Steuerungen und Verfahren zur Programmierung von speicherprogrammierbaren Steuerungen

Die Erfindung betrifft eine graphische Bedienoberfläche zur Programmierung von speicherprogrammierbaren Steuerungen sowie ein Verfahren zur Programmierung von speicherprogrammierbaren Steuerungen.

Bei der Bedienung von Computerprogrammen sind graphische Benutzeroberflächen insbesondere auf Basis des sogenannten Windows Betriebssystems im sogenannten Personalcomputerbereich weit verbreitet. Diese bieten bekanntlich auch für einen ungeübten Personenkreis eine annähernd übersichtliche und intuitive Steuerbarkeit von Computerprogrammen. Eine Grundlage für diese erleichterte Bedienbarkeit sind moderne Bedienmittel für Computer, insbesondere die sogenannte "Maus", welche die Bedienelemente von graphischen Benutzeroberflächen besonders leicht zugänglich macht.

Im Bereich der industriellen Verarbeitung von Daten, insbesondere bei der Verarbeitung von Produktionsdaten in technischen Prozessen z.B. mittels speicherprogrammierbarer Steuerungen, wird bei der Projektierung von Steuerungsprogrammen vielfach noch auf einer befehlscodeähnlichen Ebene gearbeitet. Hierbei müssen an die Ein- und Ausgänge der Steuerung gerichtete Steuerungsanweisungen in einer speziellen Programmiersprache, z.B. der Sprache STEP 5 bzw. STEP 7 der Firma SIEMENS, zu einer sogenannten Ablaufsteuerung zusammengestellt werden. Der Umgang mit derartigen Programmiermitteln erfordert zumindest gewisse Vorkenntnisse und technische Erfahrungen. Er ist somit allenfalls dem Betriebspersonal z.B. von produktionstechnischen Anlagen, in denen z.B. speicherprogrammierare Steuerungen eingesetzt werden, möglich.

Es ist beabsichtigt, speicherprogrammierbare Steuerungen einfacher Art auch einem weiten, überwiegend privaten Personenkreis zur Verfügung zu stellen. Dieser kann speicherprogrammierbare Steuerungen z.B. in haustechnischen Anlagen vielfach einsetzen. Für diesen Personenkreis ist aber die Anwendung von herkömmlichen Programmiermitteln auf einer befehlscodeähnlichen Ebene nicht möglich.

In der Zeitschrift "industrie - elektrik + elektronik", Maschinenausrüstung + Automatisierung, Heft 1, Januar 1988 ist unter dem Titel "SPS-Esperanto" ein systemunabhängiges Programmiersystem für Steuerungen beschrieben. Dieses CAD/CAM Softwarepaket ist ein grafisches Programmierwerkzeug zur Programmierung von speicherprogrammierbaren Steuerungen. Dabei kann die gewünschte Steuerungsaufgabe mittels graphischer Module, Linienverbindungen und Kommentaren beschrieben werden.

Der Erfindung liegt die Aufgabe zugrunde, eine graphische Bedienoberfläche sowie ein Verfahren zur Programmierung von speicherprogrammierbaren Steuerungen anzugeben, welche(s) auch für ungeübte Benutzer aus dem nichtindustriellen Bereich handhabbar ist.

Die Aufgabe wird durch eine Bedienoberfläche sowie durch ein Verfahren mit den in Ansprüchen 1 bzw. 13 angegebenen Merkmalen gelöst.

Die Erfindung wird an Hand von in den nachfolgend kurz angeführten Figuren dargestellten Ausführungsbeispielen näher erläutert. Dabei zeigt
- FIG 1 :: beispielhaft ein Programmhauptfenster der erfindungsgemäßen Bedienoberfläche,
- FIG 2 :: beispielhaft ein Projektfenster der erfindungsgemäßen Bedienoberfläche, wobei die digitalen Eingänge einer speicherprogrammierbaren Steuerung angezeigt werden,
- FIG 3 :: das beispielhafte Projektfenster von FIG 2, wobei die digitalen Ausgänge der speicherprogrammierbaren Steuerung angezeigt werden,
- FIG 4 :: beispielhaft ein Programmierfenster der erfindungsgemäßen Bedienoberfläche, welches zum digitalen Ausgang 1 des beispielhaften Projektfensters von FIG 2 gehört und in dem der dazugehörige Basisknoten angezeigt ist,
- FIG 5 :: beispielhaft eine Symbolpalette der erfindungsgemäßen Bedienoberfläche,
- FIG 6 :: beispielhaft ein Knoten der erfindungsgemäßen Bedienoberfläche, welcher die Eigenschaft eines digitalen Eingangs aufweist,
- FIG 7 :: beispielhaft ein zum Knoten von Fig.6 gehöriges Dialogfenster zur Vorgabe von dessen Eigenschaften,
- FIG 8 :: beispielhaft ein weiterer Knoten der erfindungsgemäßen Bedienoberfläche, welcher die Eigenschaft einer Variable aufweist,
- FIG 9 :: beispielhaft ein zum Knoten von Fig.8 gehöriges Dialogfenster zur Vorgabe von dessen Eigenschaften,
- FIG 10 :: das beispielhafte Programmierfenster von Fig.4, in dem zusätzlich ein Knoten dargestellt ist, welcher gemäß der Erfindung durch grafische Programmverknüpfung mit dem dazugehörigen Basisknoten verbunden werden soll,
- FIG 11 :: beispielhaft einer graphische Programmverknüpfungen von zwei Knoten zu einer logischen UND-Verknüpfung gemäß der Erfindung,
- FIG 12 :: beispielhaft einer graphische Programmverknüpfungen von drei Knoten zu einer logischen ODER-Verknüpfung gemäß der Erfindung,
- FIG 13 :: das beispielhafte Programmierfenster von Fig.4 bzw. 10, in dem Knoten aus dem Projektfenster von Fig.2 gemäß der Erfindung durch grafische Programmverknüpfung zu einem Steuerprogramm für den Ausgang 1 einer speicherprogrammierbaren Steuerung gemäß dem Projektfenster von Fig.3 verbunden sind,
- FIG 14 :: beispielhaft ein zum ersten Zweig des Basisknotens von Fig.13 gehöriges Dialogfenster zur Vorgabe von dessen Eigenschaften,
- FIG 15 :: beispielhaft ein zum dritten Zweig des Basisknotens von Fig.13 gehöriges Dialogfenster zur Vorgabe von dessen Eigenschaften, und
- FIG 16 :: ein weiteres beispielhafte Programmierfenster, in dem Knoten aus dem Projektfenster von Fig.2 gemäß der Erfindung durch grafische Programmverknüpfung zu einem Steuerprogramm für den Ausgang 0 einer speicherprogrammierbaren Steuerung gemäß dem Projektfenster von Fig.3 verbunden sind.

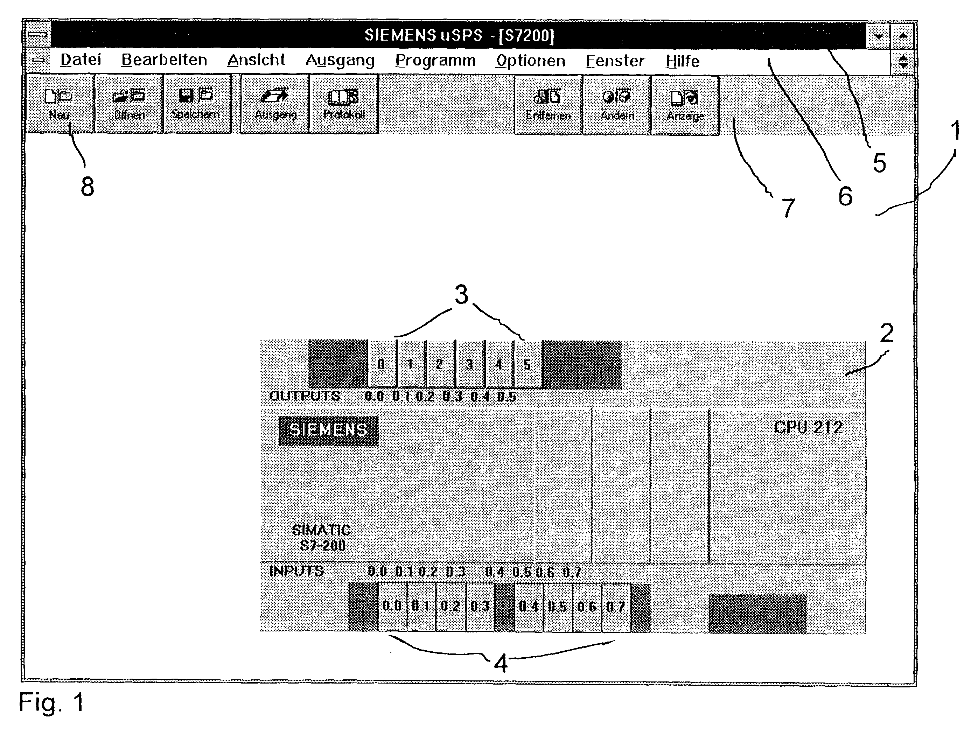

Figur 1 zeigt beispielhaft ein mögliches Programmhauptfenster 1 der erfindungsgemäßen Bedienoberfläche. In einer Programm und Dateianzeigeleiste 5 am Kopfende des Programmhauptfensters wird in einer beispielhaft dem sogenannten Windows Standard konformen Weise der jeweilige Programmname, z.B. SIEMENSuSPS und der aktuelle Dateiname z.B. [S7200] angezeigt. Eine darunter befindliche Menüleiste 6 macht übliche, sogenannte Pull-Down Menüs DATEI, BEARBEITEN, ANSICHT, ... HILFE zugänglich, über die gängige Programmbedienungen eingebbar sind. In einer weiteren, darunter befindlichen Schaltflächenleiste 7, einer sogenannten Toolbar, sind Schaltflächen angeordnet, durch deren Bedienung, z.B. mit einer sogenannten Computer Maus, häufig benötigte, besonders programmspezifische grafische Bedienelemente der Benutzeroberfläche zugänglich werden. So kann z.B. mit der Schaltfläche 8 "Neu" ein neues, sogenanntes Projektfenster der erfindungsgemäßen Bedienoberfläche generiert werden. Dessen Aussehen und Funktion wird nachfolgend ausführlich näher erläutert werden.

Im eigentlichen Anzeigefeld unter den Leisten 5,6,7 ist im Programmhauptfenster 1 der Figur 1 beispielhaft das Programmsymbol 2 einer speicherprogrammierbaren Steuerung graphisch dargestellt, für welche mit der erfindungsgemäßen graphischen Bedienoberfläche ein Steuerungsprogramm editiert werden soll. In dem Programmsymbol sind insbesondere die bei der jeweiligen Hardware zur Verfügung stehenden sogenannten Ausgangsclips 3, d.h. Anschlußelemente für binäre und analoge Ausgänge 0.0, 0.1 ... und die zur Verfügung stehenden sogenannten Eingangsclips 4, d.h. Anschlußelemente für binäre und analoge Eingänge 0.0, 0.1 ... der speicherprogrammierbaren Steuerung angezeigt.

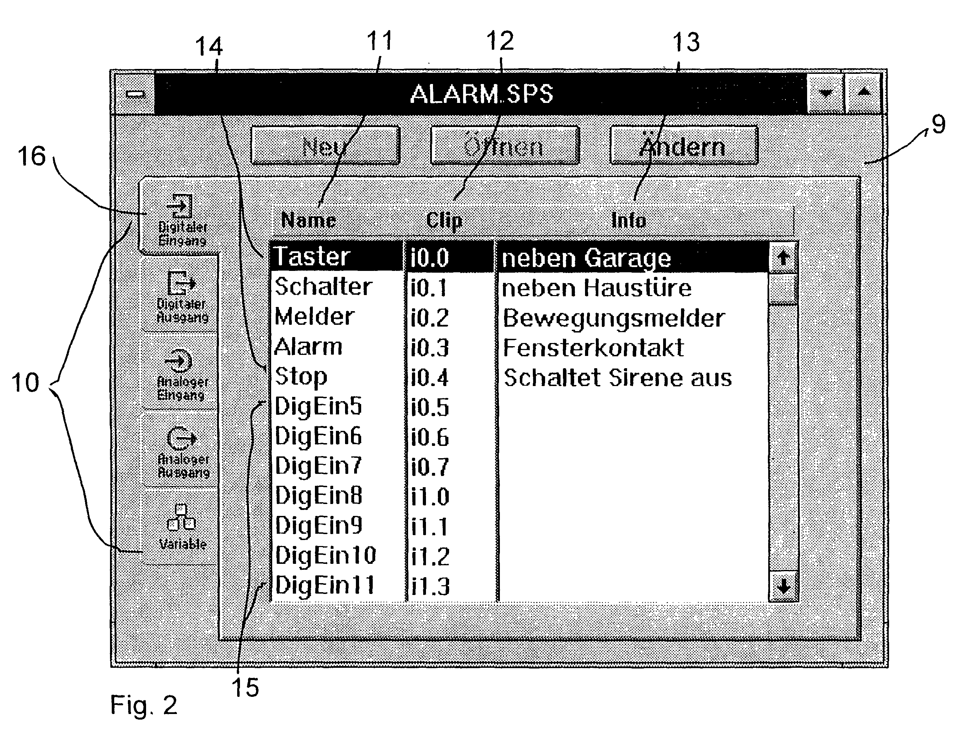

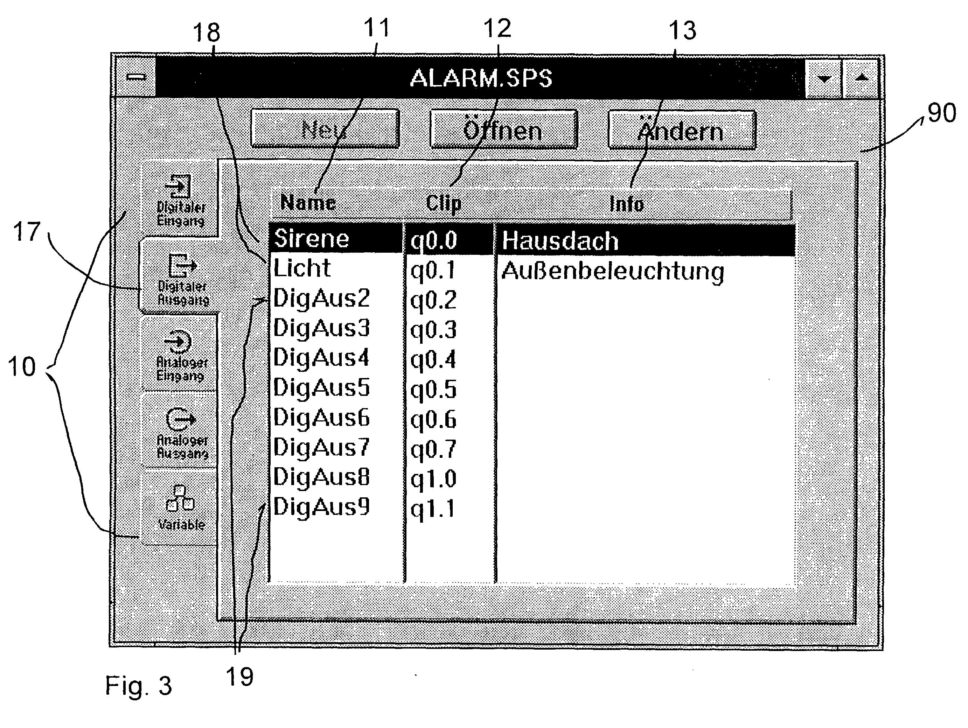

An Hand der Figuren 2 und 3 wird nachfolgend ein erstes, mögliches Element der erfindungsgemäßen graphischen Bedienoberfläche zur Programmierung von speicherprogrammierbaren Steuerungen, das sogenannte Projektfenster, erläutert. Darin sind vorteilhaft die Schnittstellen, d.h. die sogenannten Clip's, der jeweiligen speicherprogrammierbaren Steuerung zusammengestellt. Bevorzugt können diese im Projektfenster auch mit anwendungsabhängigen Kommentierungen versehen werden.

Bei dem in Figur 2 dargestellten beispielhaften Projektfenster 9 sind beispielhaft alle zu einem Steuerungsprogramm mit dem Namen ALARM.SPS gehörige Schnittstellen der speicherprogrammierbaren Steuerung vom Typ "digitaler Eingang" angezeigt. Die Bezeichnung des Anschlußelementes der jeweiligen Schnittstelle der speicherprogrammierbaren Steuerung, d.h. die Clip Numerierung i0.0, ... , i0.7, i1.0, ... in der Spalte 12 entspricht dabei bevorzugt der Darstellung im Programmsymbol 2 der speicherprogrammierbaren Steuerung im Programmhauptfenster 1 von Figur 1. In den benachbarten Spalten 11 und 13 können anwendungsspezifische "Name" und weitere anwendungsspezifische "Informationen" für die Schnittstellen eingegeben werden. So sind die ersten fünf "digitalen Eingänge" beispielhaft belegt mit Schnittstellenelementen, welche bei einer Hausüberwachung vorkommen können. So ist am Clip i0.0 ein TASTER angeschlossen, der angebracht ist "neben Garage". Ferner ist am Clip i0.1 der Steuerung ein SCHALTER, am Clip i0.2 ein MELDER, am Clip i0.3 ein ALARM gebendes Element, z.B. ein Fensterkontakt, und schließlich am Clip i0.4 ein STOP verursachendes Element z.B. zur Ausschaltung einer Sirene angeschlossen. Die weiteren Clips 15 sind im Beispiel nicht belegt, so daß im Projektfenster 9 von Figur 2 in den dortigen Spalten 11 und 13 vorteilhaft sogenannte Voreinstellungen DigEin5, DigEin6, ... für die nicht belegten, weiteren "Digitalen Eingänge" der Steuerung angezeigt werden.

Vorteilhaft sind in einem Projektfenster die Schnittstellen der speicherprogrammierbaren Steuerung nach der jeweiligen Funktion sortiert in graphischen Mappen zusammengefaßt, welche über Schaltflächen 10 aktivierbar sind. In den Beispielen der Figuren 2 und 3 ist eine derartige Ausführung bereits dargestellt. So ist in Fig. 2 die Mappe für die Anzeige der "Digitalen Eingänge" der speicherprogrammierbaren Steuerung über eine entsprechende Schaltfläche 16 aktiviert, während in Fig. 3 die Mappe für die Anzeige der "Digitalen Ausgänge" der über eine entsprechende Schaltfläche 17 aktiviert ist. Bei dem beispielhaften Projektfenster in den Figuren 2 und 3 sind ferner Mappen für die "Analogen Eingänge" und "Analogen Ausgänge" sowie für sogenannte "Variablen" der speicherprogrammierbaren Steuerung vorgesehen.

In dem in Fig. 3 dargestellten beispielhaften Projektfenster 9 sind beispielhaft alle zu dem Steuerungsprogramm ALARM.SPS von Fig.2 gehörige Schnittstellen der speicherprogrammierbaren Steuerung vom Typ "digitaler Ausgang" angezeigt. Die Bezeichnung des Anschlußelementes der jeweiligen Schnittstelle der speicherprogrammierbaren Steuerung, d.h. die Clip Numerierung q0.0, ... , q.7, q1.0, q1.1 in der Spalte 12 entspricht dabei bevorzugt wiederum der Darstellung im Programmsymbol 2 der speicherprogrammierbaren- Steuerung im Programmhauptfenster 1 von Figur 1. In den benachbarten Spalten 11 und 13 können ebenfalls anwendungsspezifische "Name" und weitere anwendungsspezifische "Informationen" für die Schnittstellen eingegeben werden. So sind die ersten zwei "digitalen Ausgänge" beispielhaft belegt mit Schnittstellenelementen, welche bei einer Hausüberwachung vorkommen können. So ist am Clip q0.0 eine SIRENE angeschlossen, welche gemäß der weiteren INFO angebracht ist auf dem "Hausdach". Ferner ist am Clip q0.1 der Steuerung ein LICHT gebendes Element, z.B. eine Lampe angeschlossen. Die weiteren Clips 19 sind im Beispiel nicht belegt, so daß im Projektfenster 90 von Figur 3 in den dortigen Spalten 11 und 13 vorteilhaft sogenannte Voreinstellungen DigAus2, DigAus3 ... für die nicht belegten, weiteren "Digitalen Ausgänge" der Steuerung angezeigt werden.

Erfindungsgemäß enthält die graphische Bedienoberfläche zumindest für jede Ausgangsschnittstelle der speicherprogrammierbaren Steuerung eine eigenes Programmierfenster. Ein derartiges Programmierfenster enthält wiederum gemäß der Erfindung einen sogenannten Basisknoten als ein erstes graphisches Bedienelement für die jeweilige Ausgangsschnittstelle. Ferner weist es zur Programmierung von insbesondere Schaltabläufen der speicherprogrammierbaren Steuerung mindestens einen weiteren Knoten auf, welcher als ein graphisches Bedienelement für eine andere Schnittstelle oder eine Gruppe von insbesondere zu einer sogenannten VARIABLEN verknüpften Schnittstellen der speicherprogrammierbaren Steuerung dient. Die Knoten verführen über jeweils eine Ausgangszweiglinie, deren Ende mit einem graphischen Bedienmittel bis zum Basisknoten oder einem anderen Knoten führbar ist. Als graphisches Bedienmittel zumindest zur Führung der Ausgangszweiglinien von Knoten kann bevorzugt ein als sogenannte Computer Maus bekanntes Eingabegeräte verwendet werden. Erfindungsgemäß wird nach einer Ablage des Endes einer derartigen Ausgangszweiglinie auf dem jeweiligen anderen Knoten sowohl eine auf der Bedienoberfläche graphisch sichtbare Verknüpfung zwischen den Knoten, als auch eine steuerungstechnische Verknüpfung zwischen den die Knoten repräsentierenden Schnittstellen hergestellt. Über diese findet dann ein programmtechnischer Transfer von aktuellen Ausgangswerten zwischen den Knoten statt.

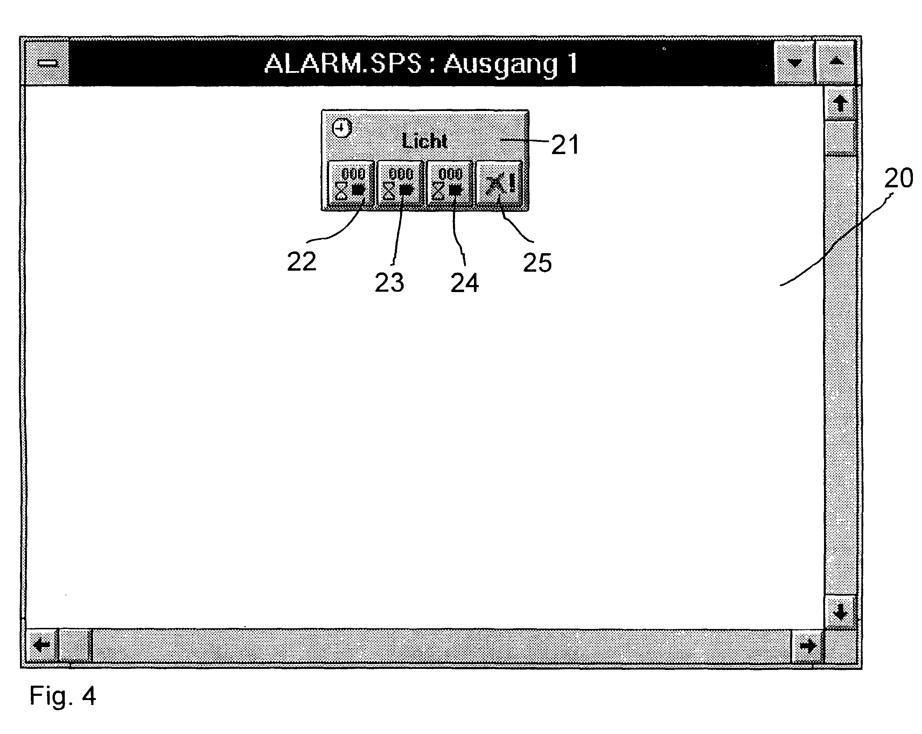

In Figur 4 ist beispielhaft ein Programmierfenster 20 dargestellt, welches zu der in Fig. 3 enthaltenen Ausgangsschnittstelle "Ausgang 1" mit dem Namen LICHT und der Clip Nummer q0.1 des Projektes ALARM.SPS gehört. Diese Ausgangsschnittstelle ist erfindungsgemäß durch den mit LICHT bezeichneten Basisknoten 21 visualisiert und zu den Zwecken einer graphischen Projektierung zugänglich. Hierzu ist der Knoten von mindestens einer weiteren Schnittstelle oder der Knoten einer Gruppe von insbesondere zu einer sogenannten VARIABLEN verknüpften Schnittstellen der speicherprogrammierbaren Steuerung im Programmierfenster anzulegen.

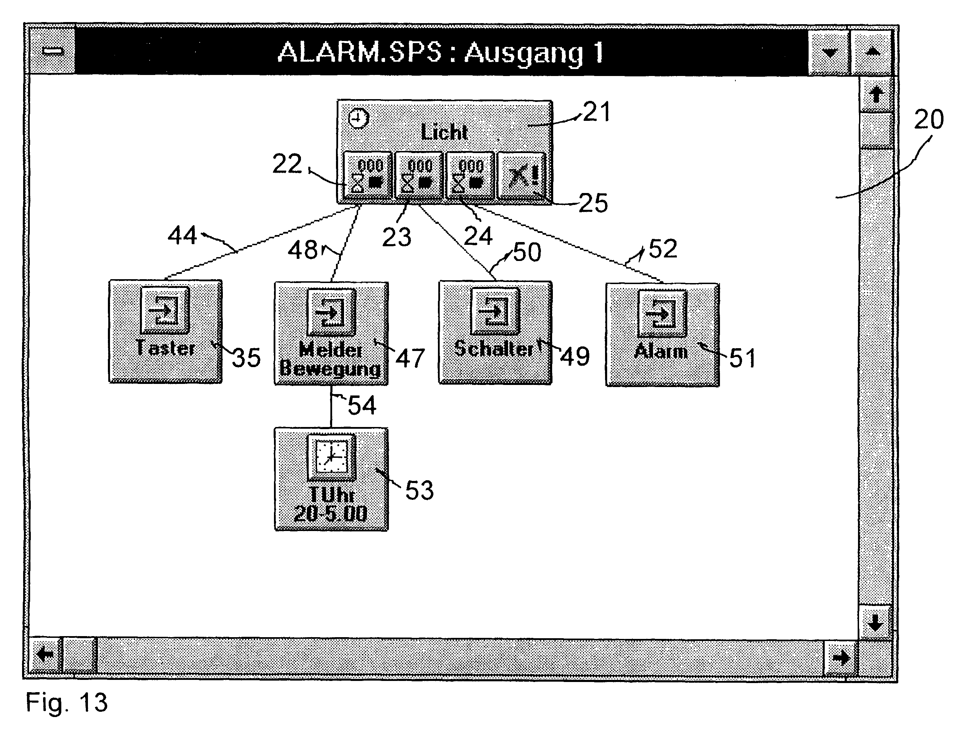

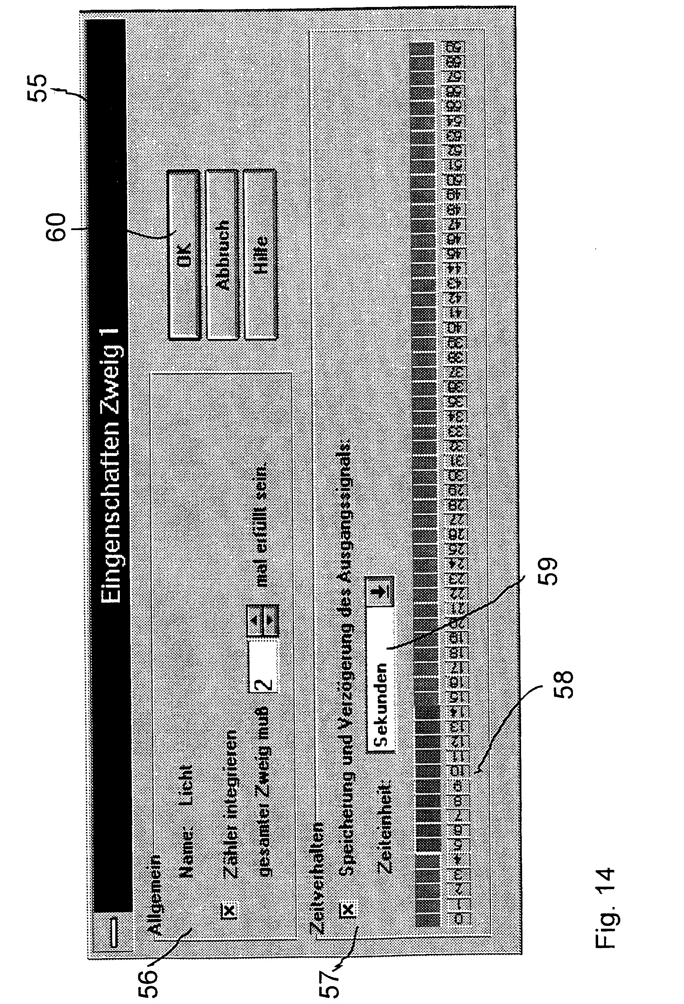

Gemäß einer Ausführungsform der erfindungsgemäßen graphische Bedienoberfläche sind in einem Programmierfenster Knoten generier- und verknüpfbar, worüber zeitliche Verzögerungen für vorgelagerte Knoten, die Ausgangssignale von anderen Schnittstellen repräsentieren, parametrierbar sind. Ein derartiger Knoten vom Typ "Wochenkalender" ist im Beispiel der Fig.13 dargestellt. Die Ausgangszweiglinie 54 dieses Knotens 53 ist mit dem Eingang des Knotens 47 verbunden. Die hierdurch entstandene logische UND Verknüpfung der Ausgangssignale der Knoten 53 und 47 bewirkt, daß ein aktives Signal auf der Ausgangszweiglinie 48 nur dann auftritt, wenn sowohl der MELDER 47 eine BEWEGUNG detektiert hat, als auch der Knoten 53 TUHR einen im Zeitraum von 20.00 bis 5.00 Uhr liegenden Zeitpunkt signalisiert. Die anwendungsabhängige Parametrierung des Knotens 53 kann mit Hilfe eines Dialogfensters erfolgen, welches mit dem nachfolgend noch näher beschriebenen Fenster von Fig. 14 vergleichbar ist.

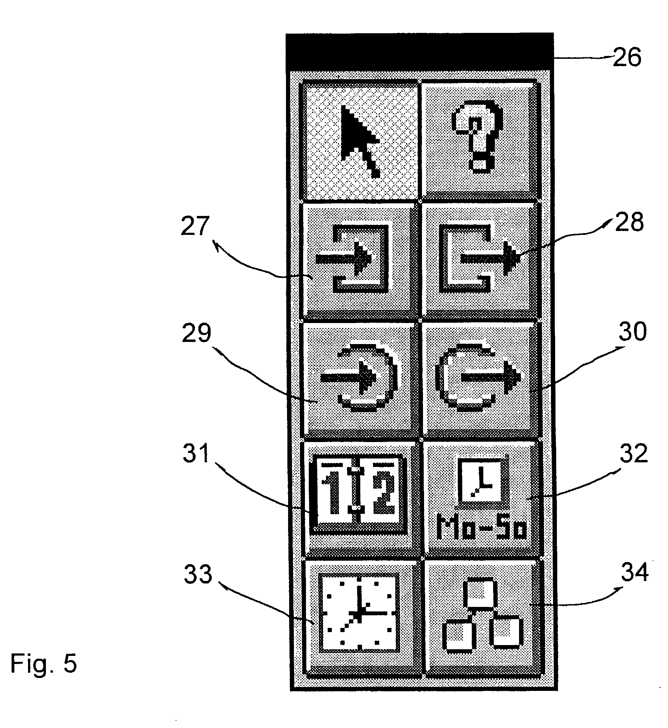

In Figur 5 ist eine beispielhafte Symbolpalette 26 dargestellt, welche entsprechend den bei der Projektierung einer speicherprogrammierbaren Steuerung üblicherweise zu berücksichtigenden Schnittstellentypen aufgebaut ist. Für jeden Typ kann ein dazugehöriger Knoten in einem aktiven Programmierfenster z.B. durch Bedienung des entsprechenden Schaltfeldes der Symbolpalette mittels einer Computermaus generiert und anschließend bevorzugt über separate Dialogfenster anwendungsabhängig parametriert werden. So dient das Schaltfeld 27 zum Einfügen eines Knotens mit der Eigenschaft "digitaler Eingang", das Schaltfeld 28 zum Einfügen eines Knotens mit der Eigenschaft "digitaler Ausgang", das Schaltfeld 29 zum Einfügen eines Knotens mit der Eigenschaft "analoger Eingang", das Schaltfeld 30 zum Einfügen eines Knotens mit der Eigenschaft "analoger Ausgang", das Schaltfeld 31 zum Einfügen eines Knotens mit der Eigenschaft "Monatskalender", das Schaltfeld 32 zum Einfügen eines Knotens mit der Eigenschaft "Wochenkalender", das Schaltfeld 33 zum Einfügen eines Knotens mit der Eigenschaft "Tagesuhr" und schließlich das Schaltfeld 34 zum Einfügen eines Knotens mit der Eigenschaft "Variable" in ein Programmierfenster.

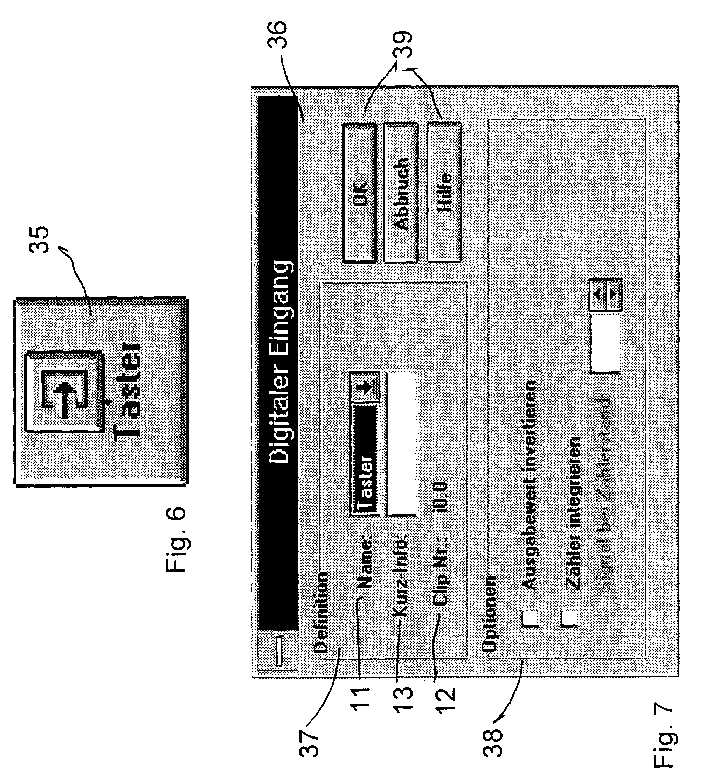

So zeigt Fig. 6 beispielhaft einen zur einer Schnittstelle mit der Eigenschaft "digitaler Eingang" im Projektfenster "ALARM.SPS" von Fig. 2 gehörigen Knoten 35, welcher die Bezeichnung "TASTER" aufweist. Das darunter in Fig. 7 dargestellte beispielhafte Dialogfenster 36 dient zur Vorgabe der Eigenschaften eines derartigen Knotens. So wird über das Eingabefeld 37 "Definition" die Zuordnung zur einer Schnittstelle der speicherprogrammierbaren Steuerung vorgenommen. Im Beispiel von Fig. 7 wurde dem Clip Nr.: i0.0 von Anzeigefeld 12 entsprechend den Angaben im Projektfenster "ALARM.SPS" von Fig.2 über das Eingabefeld 11 der Begriff TASTER zugeordnet. Über das Feld 13 kann noch eine anwendungsabhängige "Kurz-Info" eingegeben werden. Mit dem Eingabefeld 38 "Optionen" können schließlich weitere Einstellungen der unter "Definition" ausgewählten Schnittstelle vorgenommen werden. Im Beispiel der Fig. 7 kann eingestellt werden, ob der Ausgabewert des Knotens invertiert werden soll oder ob über einen integrierenden Zähler ("Zähler integrieren") erst nach Eintritt einer vorgebbaren Anzahl von binären Eingangssignalen ein Ausgangssignal abgegeben werden soll ("Signal bei Zählerstand"). Alle Vorgaben können über Quittungseingabefelder 39, welche z.B. entsprechend dem üblichen WINDOWS Standard die Funktionen OK, ABBRUCH, HILFE bereitstellen eingegeben oder verworfen werden.

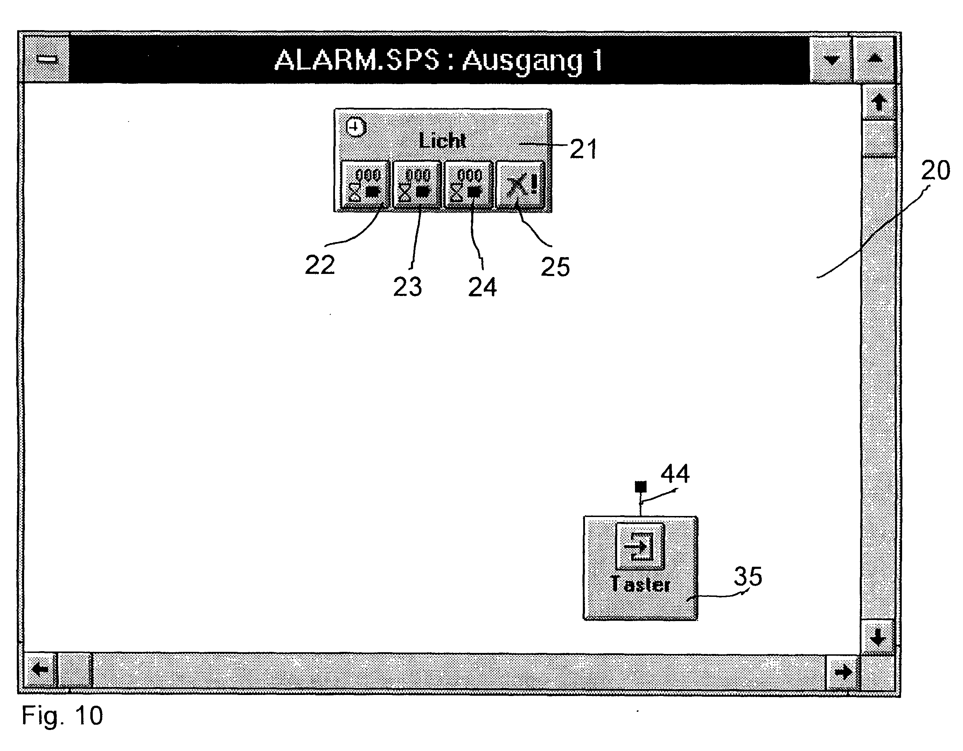

In Figur 10 ist das Programmierfenster 20 zur graphischen Programmverknüpfung des Basisknotens 21 mit der Bezeichnung "Licht", welcher zum Ausgang 1 des Projektfensters "ALARM.SPS" in Fig.3 gehört, erneut dargestellt. Zusätzlich enthält dieses den bereits erläuterten Knoten 35 mit der Bezeichnung "TASTER". Dieser Knoten weist am oberen Ende eine Ausgangszweiglinie 44 auf, welche zur graphischen Programmverknüpfung des Knotens mit dem Basisknoten des Programmierfensters oder vorgeschalteten anderen Knoten dient. Mit einem graphischen Bedienmittel, z.B. einer sogenannten Computer Maus, kann das mit einem schwarzen Quadrat markierte Ende der Ausgangszweiglinie 44 bis zum Basisknoten 21 geführt und dort abgelegt werden. Hierdurch wird sowohl graphisch als auch programmtechnisch eine Verknüpfung des Ausgangssignales des Knotens "Taster" 35 mit dem Eingang des Basisknotens "Licht" 21 bewirkt. Steuerungstechnisch hat dies also zur Folge, daß ein durch die Betätigung des Taster erzeugtes binäre Signal an der Ausgangszweiglinie 44 des Knotens 35 eine an dem durch den Basisknoten 21 repräsentierten binären Ausgang 21 angeschlossene Lichtquelle aktiviert oder deaktiviert. Diese graphische und steuerungstechnische Verknüpfung des Knotens 35 über die Ausgangszweiglinie 44 mit dem Basisknoten 21 ist im linken Bereich des in Fig. 13 dargestellten Programmierfensters 20 dargestellt.

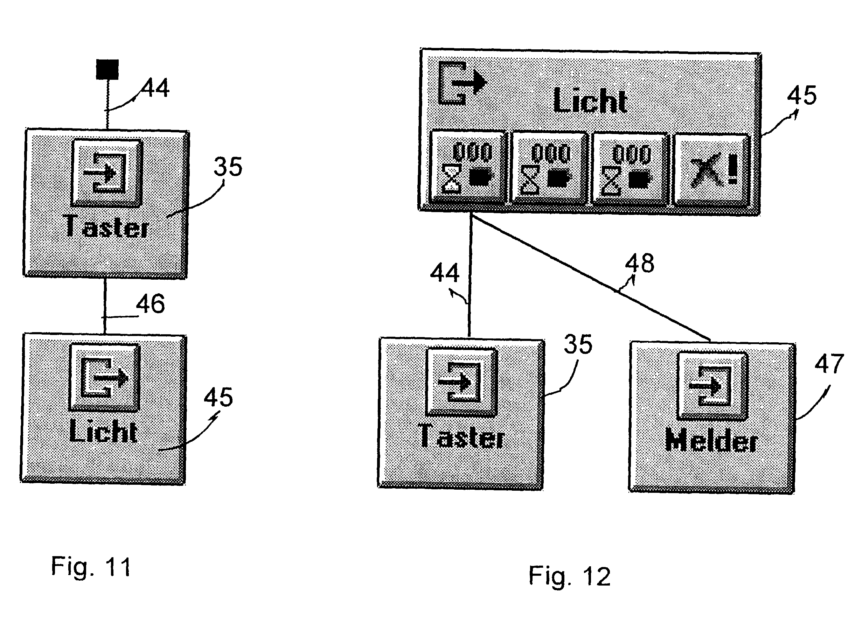

Bei der erfindungsgemäßen graphische Bedienoberfläche bewirkt eine reihenartige graphische Verknüpfung von Knoten eine steuerungstechnische UND-Verknüpfung von deren Ausgangssignalen, während eine graphische Verknüpfung von parallelen Knoten mit einem anderen Knoten oder dem Basisknoten eine steuerungstechnische ODER-Verknüpfung von deren Ausgangssignalen bewirkt. Dies ist in den Figuren 11, 12 bildlich dargestellt.

So zeigt Figur 11 beispielhaft die graphische Programmverknüpfung der zwei Knoten 45 und 35 zu einer steuerungstechnischen UND Verknüpfung. Hierzu ist die Ausgangszweiglinie 46 des Knotens "LICHT" 45 mit dem vorgeschalteten Knoten "TASTER" 35 verknüpft. Dies hat zur Folge, daß ein aktives binäres Signal nur dann an der Ausgangszweiglinie 44 des Knotens 35 ansteht, wenn sowohl ein aktives binäres Signal an der Ausgangszweiglinie 46 des Knotens 45 ansteht, d.h. im Beispiel das LICHT angeschaltet ist, als auch der Knoten 35 selbst ein binäres Signal generiert, also im Beispiel der TASTER betätigt wird. Ein derartiges Signal an der Ausgangszweiglinie 44 kann z.B. zum Rücksetzen eines Betriebsmittels eingesetzt werden, z.B. zur Ausschaltung der Lampe am Ausgang LICHT.

Entsprechend ist in Figur 12 beispielhaft die graphische Programmverknüpfung der drei Knoten 35, 47 und 45 zur einer steuerungstechnischen ODER Verknüpfung dargestellt. Hierzu sind sowohl die Ausgangszweiglinie 44 des Knotens 35 mit der Bezeichnung "TASTER", als auch die Ausgangszweiglinie 48 des Knotens 47 mit der Bezeichnung "MELDER", z.B. ein sogenannter Bewegungsmelder, welche beide die Eigenschaft "digitaler Eingang" aufweisen und zu dem in Fig.2 beispielhaft dargestellten Projektfenster "ALARM.SPS" gehören, zum Basisknoten 45 mit der Bezeichnung "LICHT" und der Eigenschaft "digitaler Ausgang" geführt. Diese graphische Programmverknüpfung der Knoten 35 und 47 mit dem vorgeschalteten Knoten 45 hat in einem Programmierfenster zur Folge, daß ein aktives binäres Signal im Basisknoten 45 dann auftritt, d.h. das LICHT dann eingeschaltet wird, wenn entweder ein aktives Signal an der Ausgangszweiglinie 44 des Knotens 35 auftritt, d.h. der "TASTER" betätigt wird, oder ein aktives Signal an der Ausgangszweiglinie 48 des Knotens 47 auftritt, d.h. der "MELDER" aktiv ist.

In Figur 13 ist am Beispiel einer Hausüberwachungsanlage ein einfaches, aber vollständiges Steuerungsprogramm für eine speicherprogrammierbare Steuerung dargestellt, welches mit der erfindungsgemäßen graphischen Bedienoberfläche erstellt wurde. In dem dortigen Programmierfenster 20 ist der bereits erläuterte Basisknoten 21 "LICHT" für den "Ausgang 1" des Projektfensters 90 "ALARM.SPS" von Fig.3 auf dem Wege der erfindungsgemäßen graphischen Programmverknüpfung beispielhaft mit den Knoten 35, 47, 49, 51, 53 verschaltet. Dabei repräsentieren die Knoten 35, 47, 49 und 51 die im Projektfenster 9 "ALARM.SPS" von Fig.2 aufgeführten "digitalen Eingänge" mit den NAMEN TASTER 35 (Clip i0.0), MELDER 47 (Clip i0.2), SCHALTER 49 (Clip i0.1) und ALARM 51 (Clip i0.3). Die jeweils dazugehörigen Ausgangszweiglinien 44, 48, 50 und 52 sind jeweils mit dem Basisknoten 21 verknüpft, so daß sich eine steuerungstechnische ODER Verknüpfung von deren Ausgangssignalen ergibt. Ferner weist der Knoten 53 die Eigenschaft einer sogenannten "TAGESUHR" auf und kann z.B. mit Hilfe der Symbolpalette 26 von Fig. 5 im Programmierfenster 20 von Figur 13 generiert werden. Im vorliegenden Beispiel ist dieser Knoten mit Hilfe eines zusätzlichen Dialogfensters, welches mit dem in Fig. 14 dargestellten Dialogfenster vergleichbar ist, derart eingestellt, daß an dessen Ausgangszweiglinie 54 im Zeitraum zwischen 20 Uhr am Abend und 5.00 Uhr am Morgen, d.h. während der Nachtstunden, ein aktives Signal anliegt. Da die Ausgangszweiglinie 54 mit dem davor liegenden Knoten 47 MELDER verknüpft ist, ergibt sich eine steuerungstechnische UND Verknüpfung von deren Ausgangssignalen.

Praktisch wird also bei dem in Fig. 13 dargestellten Beispiel der Ausgang 1, d.h. der Clip q0.1 aktiviert, wenn entweder der TASTER 35 betätigt wird, oder der SCHALTER 49 betätigt wird, oder der ALARM 51 (Fensterkontakt) ausgelöst hat, oder wenn der MELDER 47 eine Bewegung detektiert hat und gleichzeitig die TAGESUHR 53 das Vorliegen eines im Zeitraum 20 bis 5 Uhr liegenden Zeitpunktes signalisiert.

Die Erfindung bietet eine Vielzahl von Vorteilen. Zum einen hat das Projektfenster den Vorteil, daß ein Benutzer hierüber eine vollständige und kompakte Übersicht über die Projektierung einer konkreten Steuerungsaufgabe erhält. Es ist zum einen sofort erkennbar, über welche Gesamtmenge an Schnittstellen die eingesetzte speicherprogrammierbare Steuerung grundsätzlich verfügt. Ferner ist sofort erkennbar, welche der verfügbaren Ein- und Ausgangsschnittstellen bei einer Projektierung anwendungsabhängig verwendet wurden, an welchen dazugehörigen Anschlußelementen der speicherprogrammierbaren Steuerung, auch Clips genannt, externe Signalgeber und Betriebsmittel angeschlossen sind, welcher Art diese Geber bzw. Betriebsmittel sind und welche Bezeichnungen diesen im konkreten Einzelfall zugewiesen wurden.

Bei der vorteilhaften Ausführungsform des Projektfensters z.B. gemäß dem Beispiel in der Figur 2, bei der die Schnittstellen der Steuerung entsprechend ihrer Art in Mappen zusammengefaßt sind, kann auf einfache Weise z.B. zwischen Ein- und Ausgangsschnittstellen sowie Variablen umgeschaltet werden. Ferner wird ein Anwender bereits mit den grafischen Symbolen vertraut gemacht, welche den Schnittstellentypen zugeordnet sind. Diese sind nämlich auf den Schaltflächen 10, 16, 17 gemeinsam mit einem darunter angeordneten, beschreibenden Text dargestellt. Diese graphischen Symbole stehen dann z.B. in der Symbolpalette von Fig. 5 zur Anwahl mittels einem graphischen Bedienmittel, z.B. einer Computermaus, zur Verfügung.

Von einem Projektfenster aus kann der Anwender entweder durch einen sogenannten Doppelklick mit einem graphischen Bedienmittel, z.B. einer Computermaus, auf eine der dort aufgelisteten Ausgangsschnittstellen bzw. eine Variable, oder durch Betätigung der Schaltfläche ÖFFNEN in den Quittungseingabefeldern das dazugehörige Programmierfenster öffnen. Wenn das Programmierfenster bereits geöffnet ist, wird es in Normal-darstellung gezeigt und im Vordergrund der graphischen Bedienoberfläche zur Anzeige gebracht. Ferner werden vorteilhaft die Schaltflächen NEU, ÄNDERN und ÖFFNEN z.B. in Fig. 3 automatisch auf aktiv bzw. inaktiv gesetzt, wenn der Anwender zwischen den verschiedenen Mappen, d.h. der Darstellung der Eingänge, Ausgänge und Variablen umschaltet.

Die durch die Erfindung bereitgestellten grafischen Editiermöglichkeiten in Programmierfenstern bieten weitere Vorteile. So ist das Erstellen von logischen Verknüpfungen der Knoten untereinander und mit dem dazugehörigen Basisknoten in einem Programmierfenster, z.B. UND, ODER und NICHT Verknüpfungen, auf einfache Weise möglich und anschließend gleichzeitig graphisch übersichtlich dokumentiert. Die Dialogfenster der Knoten zur Einstellung von deren Eigenschaften können insbesondere durch Betätigen der Eigenschaftsschaltfläche auf dem Knoten mittels eines graphischen Bedienmittels aktiviert werden. Ein besonderer Vorteil wird darin gesehen, daß die grafische Darstellung der von einem Anwender zusammengestellten Steuerprogrammanwendung immer die Form eines sogenannten Baumes annimmt, da die Ausgangszweiglinie eines jeden Knotens nur auf einen vorgeschalteten weiteren Knoten verzweigen kann, aber die Ausgangszweiglinien von beliebig vielen nachgeschalteten Knoten auf einen einzigen vorgeschalteten Knoten verzweigen können. Ob eine Verzweigung vollständig ist, kann an der Lage der jeweiligen Ausgangszweiglinie auf einfache Weise erkannt werden. Eine noch unverbundene Ausgangszweiglinie kann zur Warnung in einer Farbe dargestellt werden, so daß am Ende der Programmierung keine noch farbigen Ausgangszweiglinien von Knoten mehr vorhanden sein sollten.

Gemäß einer weiteren Ausführungsform der Erfindung wird von der graphische Bedienoberfläche bewirkt, daß nach einer Verknüpfung der Ausgangszweiglinie eines Knotens mit dem Basisknoten oder einem anderen Knoten, dieser Knoten im Programmierfenster graphisch stets unterhalb dem Basisknoten oder dem anderen Knoten liegend angezeigt wird. Eine derartige Struktur ist bereits in den Beispielen der Figuren 11, 12, 13 und 16 dargestellt. Ferner kann vorteilhaft das Bewegen von Knoten und dem Basisknoten im Programmierfenster von der graphischen Bedienoberfläche so eingeschränkt werden, daß ein Vorgänger Knoten immer geometrisch über seinen Nachfolger Knoten plaziert ist. Dadurch bleibt das Baumdiagramm der jeweiligen Steuerung stets übersichtlich. Schließlich kann das Verschieben der Knoten im Programmierfenster auch so eingeschränkt werden, daß ein Benutzer markierte Knoten nicht nach links oder oben aus dem Fenster hinausschieben kann. Verschiebt ein Anwender Knoten nach rechts bzw. nach unten, werden am Rande des Programmierfensters vorteilhaft sogenannte Scrollbalken eingeblendet.

Bei einer weiteren, vorteilhaften Ausführungsform der erfindungsgemäßen graphische Bedienoberfläche weist der Basisknoten eines Programmierfensters mindestens einen separaten Zweigeingang auf, worüber eine parametrierbare Verknüpfung mit der Ausgangszweiglinie von mindestens einem Knoten möglich ist. Bevorzugt können über einen derartigen Zweigeingang mit Hilfe eines zusätzlichen, dazugehörigen Dialogfensters Zeitbedingungen und weitere logische Schaltbedingungen vorgegeben werden, welche erfüllt sein müssen, bevor ein von einem nachgeschalteten Knoten über die entsprechende Ausgangszweiglinie zugeführtes Ausgangssignal im Basisknoten wirksam wird. Vorteilhaft wird dann, wenn der Basisknoten eines Programmierfensters mindestens zwei separate Zweigeingänge aufweist, bei einer graphische Verknüpfung von Knoten mit den Zweigeingängen eine steuerungstechnische ODER-Verknüpfung von deren Ausgangssignalen bewirkt.

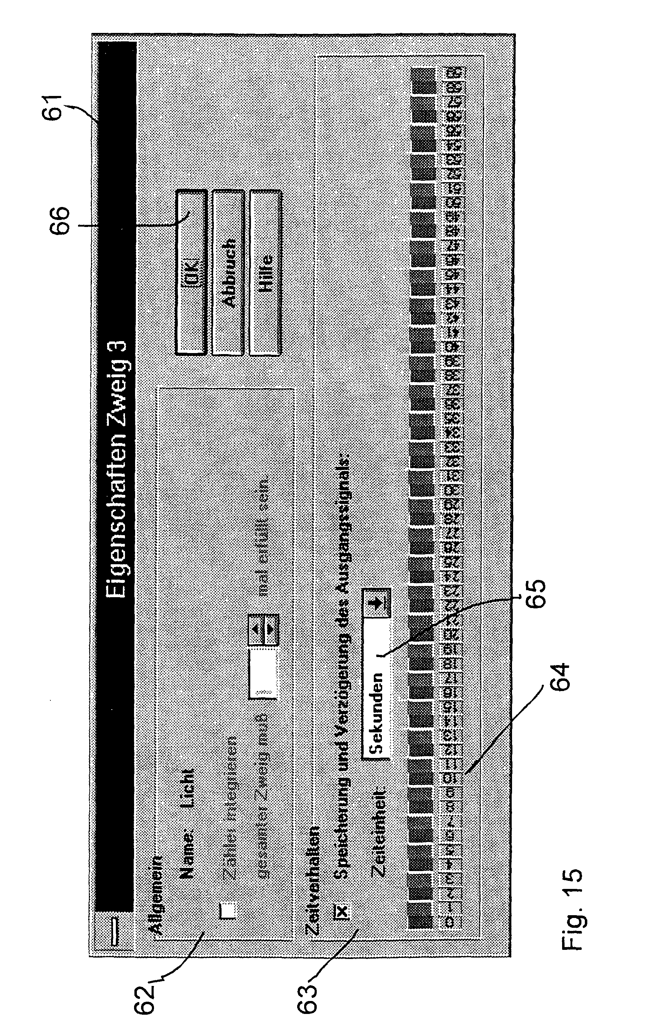

Eine derartige Ausführungsform der Erfindung ist bereits in den Figur 4, 10 und 13 dargestellt und soll am Beispiel der Figur 13 erläutert werden. Der Basisknoten 21 des dortigen Programmierfensters 20 weist vorteilhaft einen ersten, zweiten, dritten und vierten Zweigeingang 22, 23, 24, 25 auf. Mit diesen Zweigeingängen können die Ausgangszweiglinien von beliebigen Knoten verknüpft werden. Im Beispiel der Figur 13 sind die Knoten 35 "TASTER" und 47 "MELDER" mit dem Zweigeingang 22, der Knoten 49 "SCHALTER" mit dem Zweigeingang 23 und der Knoten 51 "ALARM" mit dem Zweigeingang 24 verknüpft. Durch Parametrierung der Eigenschaften der Zweigeingänge können bevorzugt zeitliche Bedingungen vorgegeben werden. Über den Zweigeingang 25 kann eine Sperrung des Basisknotens 21 bewirkt werden, d.h. ein sogenanntes RESET, solange ein aktives Signal vom nicht dargestellten nachgeschalteten Knoten zugeführt wird. Die Eigenschaften z.B. der Zweigeingänge 22 und 24 können mit den in den nachfolgenden Figuren 14 und 15 beispielhaft dargestellten Dialogfenstern 55 "EIGENSCHAFTEN ZWEIG 1" und 61 "EIGENSCHAFTEN ZWEIG 2" vorgegeben werden.

So weist das Dialogfeld 55 von Figur 14 ein Eingabefeld "Allgemein" 56 zur Einstellung von allgemeinen Schaltbedingungen des Zweigeingangs 22 auf. Dabei kann beispielsweise eine integrierende Zählschaltbedingung vorgegeben werden. Ein am Zweigeingang anliegendes Ausgangssignal eines Knotens wirkt somit erst dann auf den Basisknoten ein, wenn das Ausgangssignal mit einer vorgebbaren Häufigkeit aufgetreten ist. Ein weiteres Eingabefeld 57 "Zeitverhalten" dient zur Einstellung von Zeitbedingungen des Zweigeingangs. Dabei kann über eine schaltbare Zeitleiste 58, welche 60 Schaltpunkte aufweist, deren "Zeiteinheit" über das Vorgabefeld 59 vorgebbar ist, einem am Zweigeingang zugeführten Ausgangssignal ein parametrierbares Schaltverhalten aufgeprägt werden. Die Vorgaben im Dialogfeld von Figur 14 können schließlich über Quittungseingabefelder 60 in üblicherweise aktiviert oder verworfen werden. In Figur 15 ist ein entsprechendes Dialogfeld 61 zur Parametrierung der Eigenschaften des Zweigeingangs 24 des Basisknotens 21 von Fig. 13 dargestellt. Dabei entsprechen die dortigen Elemente mit den Bezugszeichen 62, 63, 64, 65 und 66 den bereits in Fig. 14 erläuterten Elementen mit den Bezugszeichen 56, 57, 58, 59 und 60.

Am Titel des Dialogfensters erkennt ein Anwender, für welchen Zweig die Einstellungen vorgenommen werden. Der Name des dazugehörigen Ausganges bzw. der Variablen, für die der Zweigdialog gilt, wird mit angezeigt, im Beispiel der Figuren 14 und 15 für den NAMEN "LICHT". Ein Anwender hat hiermit die Möglichkeit, eine Zählerfunktion zu aktivieren. Speicherung und Verzögerung des Ausganges bzw. der Variablen können in der Zeitleiste einfach vorgegeben werden. Die Eingabe des gewünschten Zählerstandes kann über einen sogenannten Spin-Schalter oder durch textuelle Eingabe vorgenommen werden.

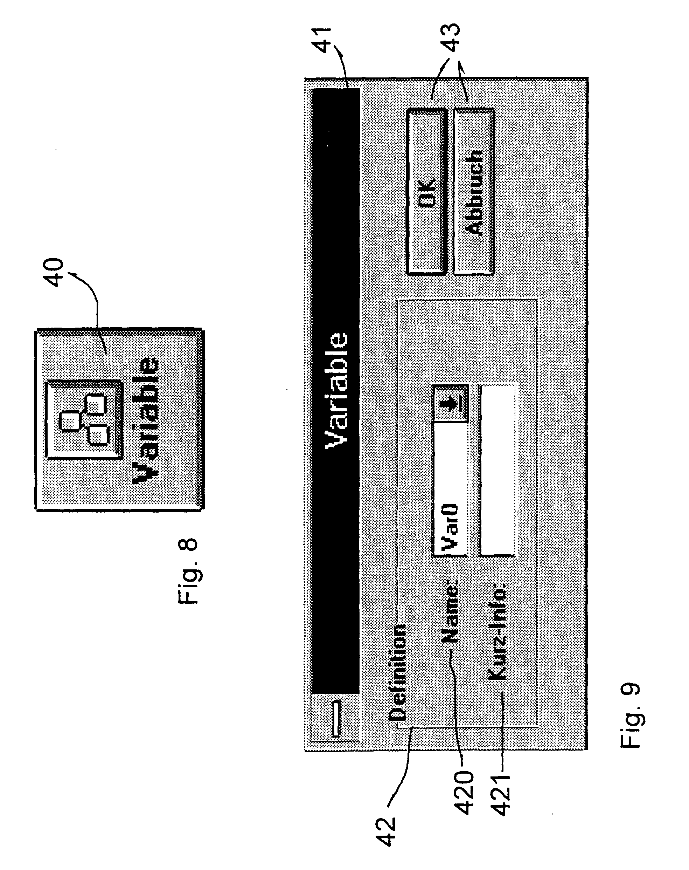

Vorteilhaft kann einer Gruppe von Schnittstellen der speicherprogrammierbaren Steuerung ein separater Knoten mit einem eigenen Programmierfenster zugeordnet werden, worin die steuerungstechnische Verknüpfung der Knoten der Gruppe von Schnittstellen durch graphische Verknüpfung der entsprechenden Ausgangszweiglinien erfolgt. In Figur 8 ist ein derartiger Knoten 40 "Var0" mit der Eigenschaft "Variable" dargestellt. Diesem können durch das in Figur 9 dargestellte Dialogfenster 41 anwendungsspezifische Kennungen zugewiesen werden. So kann der Variablen im Eingabefeld 420 ein der entsprechenden Steuerungsaufgabe entsprechender NAME zugewiesen werden. In einem folgenden Eingabefeld 421 können weitere "Kurz-Info" im Klartext definiert werden. Derart definierte Variablen stehen dann für eine Steuerungsaufgabe im dazugehörigen Projektfenster, z.B. dem Projektfenster 9 von Fig. 2, zur Verfügung und können durch Betätigung der entsprechenden Schaltfläche 10 angezeigt werden. Vorteilhaft sind ebenfalls alle Variablen eines Projektes in Form einer Mappe zusammengefaßt.

In dem einer Variablen zugeordneten, eigenen Programmierfenster, welches in etwa den gleichen Aufbau hat wie das in Figur 4 dargestellte Programmierfenster 20, können beliebig viele Knoten eines Projektes und auch bereits definierte andere Variablen eines Projektes zu einem eigenen Steuerprogramm verbunden werden. Der Basisknoten des dazugehörigen Projektfensters ist in diesem Fall nicht einem Ausgang der speicherprogrammierbaren Steuerung zugeordnet, sondern stellt den Ausgang der Variablen dar. Eine Variable kann als ein eigenständiger Knoten ein oder auch mehrfach in das Programmierfenster eines Projektes eingebunden und dort in der erfindungsgemäßen Weise mit anderen Knoten verbunden werden. Mit einer derartigen Variablen können Verknüpfungen von bestimmten Schnittstellen einer Steuerung, welche z.B. in einem u.U. komplexen "Programmierbaum" eines Programmierfensters mehrfach benötigt werden, zu einem eigenständigen Knoten zusammengefaßt werden. Hierdurch wird die Übersichtlichkeit und die fehlerfreie Verknüpf barkeit der Knoten in diesem Programmierfenster erleichtert.

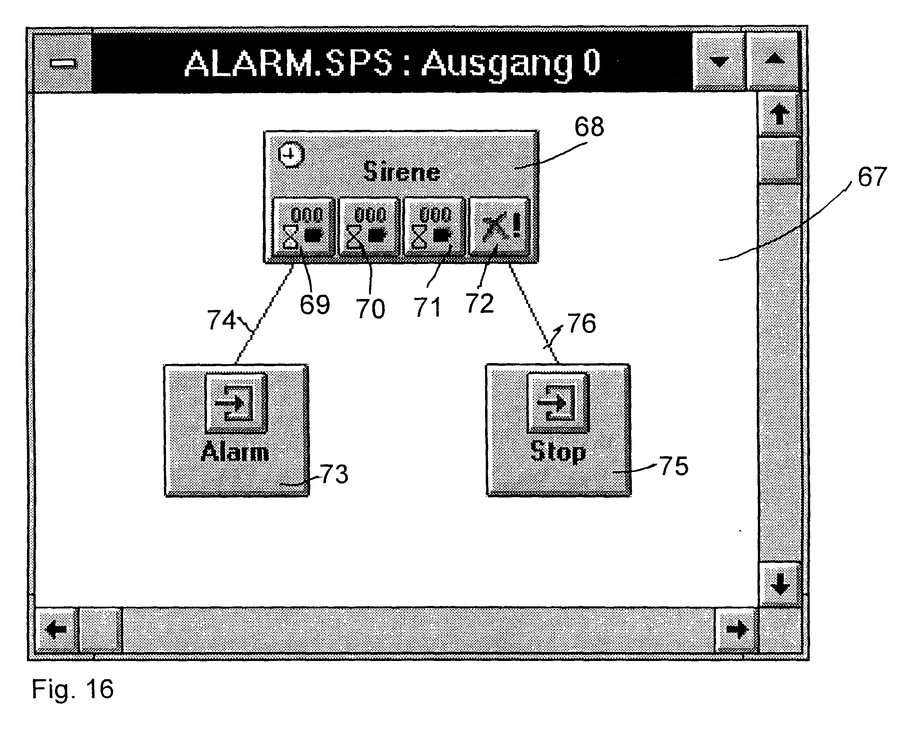

In Figur 16 ist abschließend das Programmierfenster 67 zur graphischen Programmverknüpfung des Basisknotens 68 mit der Bezeichnung "SIRENE", welcher zum Ausgang 0 des beispielhaften Projektfensters "ALARM.SPS" in Fig.3 gehört, dargestellt. Da bei der dazugehörigen speicherprogrammierbaren Steuerung gemäß Figur 3 nur die zu den Anschlußelementen Clip q0.0 und q0.1 gehörigen Schnittstellen von Typ "digitaler Ausgang" belegt sind, stellt das Programmierfenster in Figur 16 die Ergänzung zu dem in Figur 13 dargestellten Programmmierfenster 20 für den Ausgang 1 dar. Der Basisknoten 68 dient somit im Beispiel zur Ansteuerung einer am Clip q0.0 der speicherprogrammierbaren Steuerung angeschlossenen Sirene.

Gemäß einer bereits erläuterten Ausführungsform der Erfindung weist auch der Basisknoten 68 mehrere Zweigeingänge auf, im Beispiel die Zweigeingänge 69, 70, 71 und 72. Über die Zweigeingänge 69, 70, 71 und 72 können vorteilhaft zeitliche Zusatzbedingungen für das Wirksam werden von zugeführten Signalen projektiert werden. Diese Zweigeingänge sind somit vergleichbar mit den am Beispiel der Figur 13 erläuterten Zweigeingängen 22, 23, 24 und 25. Der Zweigeingang 72 des Basisknotens 68 stellt wiederum den sogenannten Reset Zweig dar, der für die Dauer eines anliegenden aktiven Signals den Basisknoten 68 deaktiviert. Seine Funktion ist somit mit dem Zweigeingang 25 des Basisknotens 21 von Figur 13 vergleichbar. Die Vorgabe der Eigenschaften der Zweigeingänge 69, 70, 71 und 72 kann wiederum mit Hilfe von Dialogfenstern erfolgen, welche den in Figuren 14 und 15 dargestellten entsprechen.

Im Beispiel von Figur 16 ist ein Knoten 73 "ALARM" mit der Eigenschaft "digitaler Eingang" aus dem Projektfenster "ALARM.SPS" von Figur 2 durch graphische Programmverknüpfung über dessen Ausgangszweiglinie 74 mit dem vorgeschalteten Basisknoten 68 verbunden. Ferner ist im Programmierfenster 67 von Figur 16 ein Knoten 75 "STOP" mit der Eigenschaft "digitaler Eingang", welcher ebenfalls aus dem Projektfenster "ALARM.SPS" von Fig.2 generiert wurde, durch graphische Programmverknüpfung über dessen Ausgangszweiglinie 76 mit dem vorgeschalteten Basisknoten 68 verbunden. Steuerungtechnisch haben diese Verknüpfungen zur Folge, daß die am binären Ausgang 0 der Steuerung angeschlossene SIRENE dann aktiviert wird, wenn über den am binären Eingang Clip i0.3 FENSTERKONTAKT gemäß Figur 2 angeschlossene Geber einen Alarm ausgelöst wurde. Das Alarmsignal kann über einen am binären Eingang Clip i0.4 gemäß Figur 2 angeschlossenen weiteren Geber ( Info : "Schaltet Sirene aus") unterbrochen werden.

Ein mit der erfindungsgemäßen graphischen Bedienoberfläche erstelltes, d.h. editiertes, Steuerungsprogramm kann nun mit einem im Menü 6 "PROGRAMM" des Programmhauptfensters 1 von Figur 1 enthaltenen Kommando "Compilierung" in einen Steuerungscode umgewandelt werden. Dieser wird schließlich in die speicherprogrammierbare Steuerung geladen, und kann dort als eigentliches Steuerungsprogramm zyklisch bearbeitet werden.

Die Erfindung hat den Vorteil, daß es damit auch für Anwender, welche keine Erfahrungen bei der Projektierung von Steuerungen haben, möglich ist, ein Steuerungsprogramm auf einfache und fehlerfreie Weise zu erstellen.

## Patentansprüche

1. Graphische Bedienoberfläche zur Programmierung von speicherprogrammierbaren Steuerungen (2), mit jeweils einem eigenen Programmierfenster (20,67) für jeweils eine Schnittstelle (3), insbesondere eine Ausgangsschnittstelle der speicherprogrammierbaren Steuerung (2), wobei
a) ein Programmierfenster (20,67) jeweils einen Basisknoten (21, 68) in Form eines graphischen Elements als Repräsentant der zugeordneten Schnittstelle (3) der speicherprogrammierbaren Steuerung (2) enthält,
b) das Programmierfenster (20, 67) mindestens einen weiteren Knoten (35,47,49,51,53) in Form eines weiteren graphischen Elements enthält, welcher als Repräsentant für eine weitere Schnittstelle (4) oder für eine Gruppe von verknüpften Schnittstellen der speicherprogrammierbaren Steuerung (2) dient und der mindestens eine Ausgangszweiglinie (44,48,50,52,54) aufweist, deren freies Ende im Programmierfenster (20, 67) der Schnittstelle (3) mit einem graphischen Bedienmittel bis zum Basisknoten (21,68) oder einem anderen Knoten (47) führbar ist,
c) nach einer Ablage des freien Endes der Ausgangszweiglinie (44,48,50,52,54) des weiteren Knotens (35,47,49,51,53) auf dem Basisknoten (21,68) bzw. dem anderen Knoten (47) eine graphische Verknüpfung zwischen den Knoten hergestellt wird,
d) eine steuerungstechnische Verknüpfung der durch die graphisch verbundenen Knoten repräsentierten Schnittstellen (3,4) der speicherprogrammierbaren Steuerung (2) für einen programmtechnischen Transfer von Steuerungsdaten hergestellt wird,
e) eine reihenartige graphische Verknüpfung von Knoten (45,35) eine steuerungstechnische UND-Verknüpfung von deren zugeordneten Ausgangssignalen bewirkt und/oder
f) eine graphische Verknüpfung von parallelen Knoten (35,47) mit einem anderen Knoten (45) oder dem Basisknoten (21, 68) eine steuerungstechnische ODER-Verknüpfung von deren zugeordneten Ausgangssignalen bewirkt.

2. Graphische Bedienoberfläche nach Anspruch 1,
**dadurch gekennzeichnet,**
**daß** die Schnittstellen der speicherprogrammierbaren Steuerung in einem Projektfenster (9,90) zusammengefaßt sind.

3. Graphische Bedienoberfläche nach Anspruch 2,
**dadurch gekennzeichnet,**
**daß** in dem Projektfenster (9,90) die Schnittstellen der speicherprogrammierbaren Steuerung nach der jeweiligen Funktion sortiert in graphischen Mappen zusammengefaßt sind, welche über Schaltflächen (10,16,17) aktivierbar sind.

4. Graphische Bedienoberfläche nach einem der vorangegangenen Ansprüche,
**dadurch gekennzeichnet,**
**daß** nach einer Verknüpfung eines Knotens mit dem Basisknoten oder einem anderen Knoten, dieser Knoten im Programmierfenster graphisch unterhalb dem Basisknoten oder dem anderen Knoten liegend angezeigt wird.

5. Graphische Bedienoberfläche nach einem der vorangegangenen Ansprüche,
**dadurch gekennzeichnet,**
**daß** einer Gruppe von Schnittstellen der speicherprogrammierbaren Steuerung ein separater Knoten (40) mit einem eigenen Programmierfenster zugeordnet werden kann (34), worin die steuerungstechnische Verknüpfung der Knoten der Gruppe von Schnittstellen durch graphische Verknüpfung der entsprechenden Ausgangszweiglinien erfolgt.

6. Graphische Bedienoberfläche nach einem der vorangegangenen Ansprüche,
**dadurch gekennzeichnet,**
**daß** der Basisknoten (21) eines Programmierfensters (20) bzw. ein Knoten (35,...) mindestens einen Zweigeingang (22,23,24,25) aufweist, worüber eine parametrierbare Verknüpfung mit der Ausgangszweiglinie von mindestens einem anderen Knoten möglich ist.

7. Graphische Bedienoberfläche nach Anspruch 6,
**dadurch gekennzeichnet,**
**daß** dann, wenn der Basisknoten (21) eines Programmierfensters (20) bzw. der Knoten (35,...) mindestens zwei separate, parametrierbare Zweigeingänge (22,23,24,25) aufweist, eine graphische Verknüpfung von anderen Knoten mit den Zweigeingängen eine steuerungstechnische ODER-Verknüpfung von deren Ausgangssignalen bewirkt.

8. Graphische Bedienoberfläche nach einem der vorangegangenen Ansprüche 6 oder 7,
**dadurch gekennzeichnet,**
**daß** mindestens eine Zweigeingang (22,23,24,25), worüber eine parametrierbare Verknüpfung mit der Ausgangszweiglinie von mindestens einem anderen Knoten möglich ist, derart ausgeführt ist, daß für die Dauer des Anliegens eines Signales von dem mindestens einen anderen Knoten der zum Zweigeingang gehörende Knoten gesperrt ist (RESET).

9. Graphische Bedienoberfläche nach einem der vorangegangenen Ansprüche,
**dadurch gekennzeichnet,**
**daß** in einem Programmierfenster separate Knoten (53,54) generier- und verknüpfbar sind, worüber zeitliche Bedingungen für andere Knoten, die Ausgangssignale von anderen Schnittstellen repräsentieren, insbesondere zeitliche Verzögerungen, parametrierbar sind (31,32,33).

10. Graphische Bedienoberfläche nach einem der vorangegangenen Ansprüche
**dadurch gekennzeichnet,**
**daß** als graphisches Bedienmittel zumindest zur Führung der Ausgangszweiglinien (44,48,50,52,54) von Knoten (35,47,49,51,53) eine sogenannte Computer Maus dient.

11. Verfahren zur Programmierung einer speicherprogrammierbaren Steuerung mittels einer graphischen Bedienoberfläche, bei dem für jeweils eine Schnittstelle, insbesondere eine Ausgangsschnittstelle (3), der speicherprogrammierbaren Steuerung (2) jeweils ein eigenes Programmierfenster (20,67) vorgesehen ist, bei dem
a) in dem jeweiligen Programmierfenster (20,67) ein Basisknoten (21, 68) in Form eines graphischen Elements als Repräsentant der zugeordneten Schnittstelle (3) der speicherprogrammierbaren Steuerung (2) dargestellt wird,
b) in dem jeweiligen Programmierfenster (20,67) mindestens ein weiteren Knoten (35,47,49,51,53) in Form eines weiteren graphischen Elements darstellbar ist, welcher als Repräsentant für eine weitere Schnittstelle (4) oder für eine Gruppe von verknüpften Schnittstellen der speicherprogrammierbaren Steuerung (2) dient, wobei der weitere Knoten (35,47,49,51,53) mindestens eine Ausgangszweiglinie (44,48,50,52,54) aufweist, deren freies Ende mit einem graphischen Bedienmittel bis zum Basisknoten (21,68) oder einem anderen Knoten (47) führbar ist, und
c) nach einer Ablage des freien Endes der Ausgangszweiglinie (44,48,50,52,54) des weiteren Knotens (35,47,49,51,53) auf dem Basisknoten (21,68) bzw. einem anderen Knoten (47) eine graphische Verknüpfung zwischen den Knoten hergestellt wird,
d) eine steuerungstechnische Verknüpfung der durch die graphisch verbundenen Knoten repräsentierten Schnittstellen (3,4) der speicherprogrammierbaren Steuerung (2) für einen programmtechnischen Transfer von Steuerungsdaten hergestellt wird,
e) eine reihenartige graphische Verknüpfung von Knoten (45,35) eine steuerungstechnische UND-Verknüpfung von deren zugeordneten Ausgangssignalen bewirkt und/oder
f) eine graphische Verknüpfung von parallelen Knoten (35,47) mit einem anderen Knoten (45) oder dem Basisknoten (21,68) eine steuerungstechnische ODER-Verknüpfung von deren zugeordneten Ausgangssignalen bewirkt.

## Claims

1. Graphical user interface for programming programmable controllers (2), each having a separate programming window (20,67) for each interface (3), in particular an output interface of the programmable controller (2), where
a) a programming window (20,67) contains one base node (21,68) in the form of a graphical element representing the assigned interface (3) of the programmable controller (2);
b) the programming window (20,67) contains at least one further node (35,47,49,51,53) in the form of a further graphical element representing a further interface (4) or a group of linked interfaces of the programmable controller (2) and which has at least one output branch line (44,48,50,52,54) whose free end can be routed by means of a graphical operator control tool to the base node (21,68) or some other node (47) in the programming window (20,67) of the interface (3);
c) after the free end of the output branch line (44,48,50,52,54) of the further node (35,47,49,51,53) is deposited on the base node (21,68) or the other node (47) a graphical linkage is established between the nodes;
d) a control-system linkage between the interfaces (3,4) of the programmable controller (2) which are represented by the graphically linked nodes is established for program-controlled transfer of control data;
e) a series-like graphical linkage of nodes (45,35) implements a control-system AND operation on their assigned output signals and/or
f) a graphical linkage of parallel nodes (35,47) with another node (45) or the base node (21,68) implements a control-system OR operation on their assigned output signals.

2. Graphical user interface in accordance with Claim 1,
**characterised in that**
the interfaces of the programmable controller are grouped together in a project window (9,90).

3. Graphical user interface in accordance with Claim 2,
**characterised in that**
in the project window (9,90) the interfaces of the programmable controller are grouped together sorted according to their respective function in graphical folders which can be activated by means of command buttons (10,16,17).

4. Graphical user interface in accordance with one of the above Claims,
**characterised in that**
after a linkage of one node with the base node or another node, this node is displayed graphically as lying beneath the base node or the other node in the programming window.

5. Graphical user interface in accordance with one of the above Claims,
**characterised in that**
a group of interfaces of the programmable controller can be assigned a separate node (40) with its own programming window (34), in which the control-system linkage of the nodes of the group of interfaces is implemented by means of graphical linkage of the corresponding output branch lines.

6. Graphical user interface in accordance with one of the above Claims,
**characterised in that**
the base node (21) of a programming window (20) or a node (35,...) has at least one branch input (22,23,24,25), by means of which a parameterisable linkage with the output branch line of at least one other node is possible.

7. Graphical user interface in accordance with Claim 6,
**characterised in that**
whenever the base node (21) of a programming window (20) or the node (35,...) has at least two separate parameterisable branch inputs (22,23,24,25), a graphical linkage of other nodes with the branch inputs implements a control-system OR operation on their output signals.

8. Graphical user interface in accordance with Claim 6 or 7,
**characterised in that**
at least one branch input (22,23,24,25), by means of which a parameterisable linkage with the output branch line of at least one other node is possible, takes a form such that the node associated with the branch input is blocked for the duration of the presence of a signal from the (at least one) other node (RESET).

9. Graphical user interface in accordance with one of the above Claims,
**characterised in that**
separate nodes (53,54) can be generated and linked in a programming window, by means of which time conditions can be parameterised for other nodes which represent output signals from other interfaces, particularly time delays (31,32,33).

10. Graphical user interface in accordance with one of the above Claims,
**characterised in that**
a so-called computer mouse is used as the graphical operator control tool at least for routing the output branch lines (44,48,50,52,54) of nodes (35,47,49,51,53).

11. Method for programming a programmable controller by means of a graphical user interface, in which a separate programming window (20,67) is provided for each interface, in particular an output interface (3), of the programmable controller (2), where
a) a base node (21,68) is shown in the respective programming window (20,67) in the form of a graphical element representing the assigned interface (3) of the programmable controller (2);
b) at least one further node (35,47,49,51,53) can be shown in the respective programming window (20,67) in the form of a further graphical element representing a further interface (4) or a group of linked interfaces of the programmable controller (2), where the further node (35,47,49,51,53) has at least one output branch line (44,48,50,52,54) whose free end can be routed by means of a graphical operator control tool to the base node (21,68) or some other node (47), and
c) after the free end of the output branch line (44,48,50,52,54) of the further node (35,47,49,51,53) is deposited on the base node (21,68) or another node (47) a graphical linkage is established between the nodes;
d) a control-system linkage between the interfaces (3,4) of the programmable controller (2) which are represented by the graphically linked nodes is established for program-controlled transfer of control data;
e) a series-like graphical linkage of nodes (45,35) implements a controlsystem AND operation on their assigned output signals and/or
f) a graphical linkage of parallel nodes (35,47) with another node (45) or the base node (21,68) implements a control-system OR operation on their assigned output signals.

## Revendications

1. Interface graphique d'exploitation pour la programmation de commandes programmables en mémoire (2), comportant à chaque fois une fenêtre de programmation particulière (20, 67) pour à chaque fois une interface (3), notamment une interface de sortie, de la commande programmable en mémoire (2), dans laquelle
a) une fenêtre de programmation (20, 67) contient à chaque fois un noeud de base (21, 68) sous la forme d'un élément graphique comme représentant de l'interface associée (3) de la commande programmable en mémoire (2),
b) la fenêtre de programmation (20, 67) contient au moins un autre noeud (35, 47, 49, 51, 53) sous la forme d'un autre élément graphique qui sert de représentant pour une autre interface (4) ou pour un groupe d'interfaces combinées de la commande programmable en mémoire (2) et qui comporte au moins une ligne de branchement de sortie (44, 48, 50, 52, 54) dont l'extrémité libre peut être guidée dans la fenêtre de programmation (20, 67) de l'interface (3) par un moyen de commande graphique jusqu'au noeud de base (21, 68) ou jusqu'à un autre noeud (47),
c) après que l'extrémité libre de la ligne de branchement de sortie (44, 48, 50, 52, 54) de l'autre noeud (35, 47, 49, 51, 53) a été déposée sur le noeud de base (21, 68) ou sur l'autre noeud (47), une liaison graphique entre les noeuds est créée,
d) une liaison en technique de commande des interfaces (3, 4), représentées par les noeuds reliés graphiquement, de la commande programmable en mémoire (2) est créée pour un transfert de données de commande du point de vue de la technique de programme,
e) une liaison graphique de noeuds (45, 35) en série provoque une combinaison ET, en technique de commande, de leurs signaux de sortie associés et/ou
f) une liaison graphique de noeuds (35, 47) en parallèle vers un autre noeud (45) ou vers le noeud de base (21, 68) provoque une combinaison OU, en technique de commande, de leurs signaux de sortie associés.

2. Interface graphique d'exploitation selon la revendication 1,
**caractérisée par le fait que** les interfaces de la commande programmable en mémoire sont regroupées dans une fenêtre de projet (9, 90).

3. Interface graphique d'exploitation selon la revendication 2,
**caractérisée par le fait que**, dans la fenêtre de projet (9, 90), les interfaces de la commande programmable en mémoire sont regroupées, triées selon leur fonction respective, en dossiers graphiques qui peuvent être activés par l'intermédiaire de surfaces de commande (10, 16, 17).

4. Interface graphique d'exploitation selon l'une des revendications précédentes,
**caractérisée par le fait que**, après une liaison d'un noeud au noeud de base ou à un autre noeud, ce noeud est affiché graphiquement dans la fenêtre de programmation en dessous du noeud de base ou de l'autre noeud.

5. Interface graphique d'exploitation selon l'une des revendications précédentes,
**caractérisée par le fait qu'**il peut être associé (34) à un groupe d'interfaces de la commande programmable en mémoire un noeud séparé (40) ayant une fenêtre de programmation particulière, la liaison en technique de commande entre les noeuds du groupe d'interfaces s'effectuant via une liaison graphique des lignes de branchement de sortie correspondantes.

6. Interface graphique d'exploitation selon l'une des revendications précédentes,
**caractérisée par le fait que** le noeud de base (21) d'une fenêtre de programmation (20) ou un noeud (35, ...) comporte au moins une entrée de branchement (22, 23, 24, 25) qui permet une liaison paramétrable avec la ligne de branchement de sortie d'au moins un autre noeud.

7. Interface graphique d'exploitation selon la revendication 6,
**caractérisée par le fait que**, lorsque le noeud de base (21) d'une fenêtre de programmation (20) ou le noeud (35, ...) comporte au moins deux entrées de branchement séparées paramétrables (22, 23, 24, 25), une liaison graphique d'autres noeuds avec les entrées de branchement provoque une combinaison OU de leurs signaux de sortie du point de vue de la technique de commande.

8. Interface graphique d'exploitation selon l'une des revendications précédentes 6 ou 7,
**caractérisée par le fait qu'**au moins une entrée de branchement (22, 23, 24, 25) permettant une combinaison paramétrable avec la ligne de branchement de sortie d'au moins un autre noeud est mise en oeuvre de telle sorte que, pour la durée de la présence d'un signal d'un autre ou des autres noeuds, le noeud appartenant à l'entrée de branchement est bloqué (RESET).

9. Interface graphique d'exploitation selon l'une des revendications précédentes,
**caractérisée par le fait que**, dans une fenêtre de programmation, on peut créer et combiner des noeuds séparés (53, 54) par l'intermédiaire desquels des conditions temporelles pour d'autres noeuds, qui représentent des signaux de sortie d'autres interfaces, notamment des retards, peuvent être paramétrées (31, 32, 33).

10. Interface graphique d'exploitation selon l'une des revendications précédentes,
**caractérisée par le fait que**, comme moyen graphique de commande au moins pour guider les lignes de branchement de sortie (44, 48, 50, 52, 54) de noeuds (35, 47, 49, 51, 53), on utilise un élément dit souris d'ordinateur.

11. Procédé pour programmer une commande programmable en mémoire au moyen d'une interface graphique d'exploitation, dans lequel on prévoit à chaque fois une fenêtre de programmation particulière (20, 67) pour à chaque fois une interface, notamment une interface de sortie (3), de la commande programmable en mémoire (2), dans lequel
a) on représente dans la fenêtre de programmation (20, 67) un noeud de base (21, 68) sous la forme d'un élément graphique comme représentant de l'interface associée (3) de la commande programmable en mémoire (2),
b) on peut représenter dans la fenêtre de programmation (20, 67) au moins un autre noeud (35, 47, 49, 51, 53) sous la forme d'un autre élément graphique qui sert de représentant pour une autre interface (4) ou pour un groupe d'interfaces combinées de la commande programmable en mémoire (2), l'autre noeud (35, 47, 49, 51, 53) comportant au moins une ligne de branchement de sortie (44, 48, 50, 52, 54) dont l'extrémité libre peut être guidée avec un moyen de commande graphique jusqu'au noeud de base (21, 68) ou jusqu'à un autre noeud (47), et
c) après avoir déposé l'extrémité libre de la ligne de branchement de sortie (44, 48, 50, 52, 54) de l'autre noeud (35, 47, 49, 51, 53) sur le noeud de base (21, 68) ou sur l'autre noeud (47), on crée une liaison graphique entre les noeuds,
d) on crée une liaison en technique de commande des interfaces (3, 4), représentées par les noeuds reliés graphiquement, de la commande programmable en mémoire (2) pour un transfert de données de commande du point de vue de la technique de programme,
e) une liaison graphique de noeuds (45, 35) en série provoque une combinaison ET, en technique de commande, de leurs signaux de sortie associés et/ou
f) une liaison graphique de noeuds (35, 47) en parallèle vers un autre noeud (45) ou vers le noeud de base (21, 68) provoque une combinaison OU, en technique de commande, de leurs signaux de sortie associés.
